# EUROPEAN PATENT APPLICATION

(11) **EP 1 666 635 A1**
(43) Date of publication of application: **07.06.2006**
(21) Application number: 05257441.5
(22) Date of filing: 02.12.2005
(51) Int. Cl.: C23C 24/04, F01D 5/00, B23P 6/00

(54) **Superalloy repair using cold spray**

(30) Priority: 03.12.2004 US 3140
(71) Applicant: UNITED TECHNOLOGIES CORPORATION, Hartford, CT 06101 (US)
(72) Inventor: DeBiccari, Andrew, North Branford, CT 06471 (US); Haynes, Jeffrey D., Stuart, FL 33496 (US)
(74) Representative: Leckey, David Herbert

(57) **Abstract**

A method for repairing components formed from a superalloy material comprises the steps of providing a component (10) formed from a superalloy material having a defect to be repaired and depositing a repair material onto a surface of the component (10) using a non-oxidizing carrier gas so that the repair material plastically deforms and bonds to the surface upon impact with the surface and thereby covers the defect.

## Description

### BACKGROUND OF THE INVENTION

### (1) Field of the Invention

The present invention relates to a method for repair components, such as turbine engine parts, formed from superalloy materials.

### (2) Prior Art

Superalloy structures have been repaired using fusion welding such as gas tungsten arc. However, the use of this type of repair technique often causes problems such as unwanted distortion. Typically, the components to be repaired have been machined to their final dimensions. As a result, any distortion cannot be tolerated. Even if the distortion is acceptable, many superalloys, most notably Waspaloy, and powder metals, such as IN100, are prone to strain age cracking during stress relief due to the presence of high tensile residual stresses resulting from the welding process. In fact, IN100 is considered to be unweldable by fusion welding methods. No effective repair method exists for this alloy.

### SUMMARY OF THE INVENTION

Accordingly, it is an object of the present invention to provide a method for repairing components formed from a superalloy material.

The foregoing object is attained by the method of the present invention.

In accordance with the present invention, a method for repairing components formed from a superalloy material broadly comprises the steps of providing a component formed from a superalloy material having a defect to be repaired and depositing a repair material onto a surface of the component with a non-oxidizing carrier gas so that the repair material plastically deforms without melting and bonds to the surface upon impact with the surface and thereby covers the defect.

Other details of the superalloy repair using cold spray, as well as other advantages attendant thereto, are set forth in the following detailed description and the accompanying drawings wherein like reference numerals depict like elements.

### BRIEF DESCRIPTION OF THE DRAWINGS

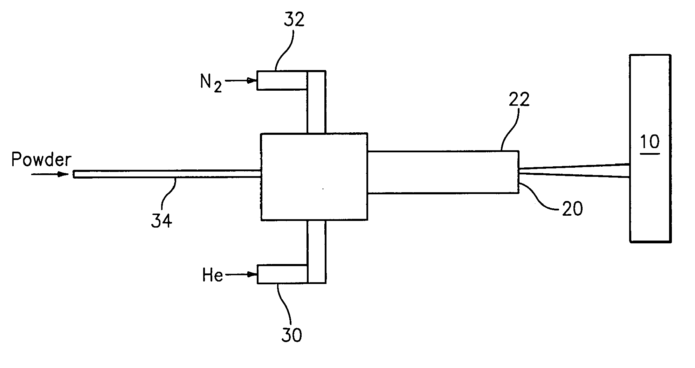

The Figure illustrates a system for repairing a defect on a component.

### DETAILED DESCRIPTION OF THE PREFERRED EMBODIMENT(S)

The present invention relates to the repair of components or parts formed from superalloy materials. As used herein, the term "superalloy materials" refers to a wide range of materials including, but not limited to, nickel-based alloys and cobalt-based alloys. The components or parts to be repaired may include, but are not limited to, turbine engine components.

In the past few years, a technique known as cold gas dynamic spraying ("cold spray") has been developed. This technique is advantageous in that it provides sufficient energy to accelerate particles to high enough velocities such that, upon impact, the particles plastically deform and bond to the surface of the component on which they are being deposited so as to build a relatively dense coating or structural deposit. Cold spray does not metallurgically transform the particles from their solid state. The cold spray process has been found to be most useful in effecting repairs of components formed from superalloy materials. For example, cold spray is effective in building up parts that have lost material due to corrosion, erosion due to hot gas, rubbing against mating components, or impact with small particulate matter, and general wear. Further, certain types of cracks are repairable using cold spray.

Prior to depositing any repair material, the damage, if any, may be removed by any appropriate method known in the art including, but not limited to, grit blasting, grinding, and milling. The damaged area is removed in such a way that a gentle-sloping surface is achieved to receive the cold spray deposition repair material. The surface may be prepared for cold spraying by grit blasting or other known method, but this is not required for all repairs. The surface may then be cleaned of residual grit and other contaminants using any suitable technique known in the art such as air blasting or solvent (e.g. acetone) cleaning. The part may then be placed in an appropriate fixture (if required), and the material deposited. In some instances, it may be desirable to hold the part stationary and manipulate the spray nozzle. In others, the spray nozzle may be stationary and the part manipulated either by hand or robot. In some situations, both the part and the nozzle may be manipulated.

Referring now to the Figure, there is shown a system for effecting repairs on superalloy components or parts. The system includes a spray gun 22 having a converging/diverging nozzle 20 through which the repair material is sprayed onto a surface 24 of the part or component 10 to be repaired. The part or component may be held stationary or it may be rotated by any suitable means (not shown) known in the art.

In the method of the present invention, the repair material feedstock is a powdered metal material. The powdered metal material may be of the same composition as the part or component is made from or it may be a compatible composition. For example, the powder metal material may be a powdered nickel base superalloy, such as IN 718, IN 625, IN 100, WASPALOY, IN 939, or GATORIZED WASPALOY. The powdered metal material particles that are used to form the deposit of repair material on the surface 24 preferably have a diameter in the range of about 5 microns to 50 microns (0.2 - 2.0 mils). Smaller particle sizes enable the achievement of higher particle velocities. Below 5 microns in diameter, the particles risk getting swept away from the surface 24 due to a bow shock layer above the surface 24, i.e., insufficient mass to propel the particle through the bow shock. The narrower the particle size distribution, the more uniform the particle velocity will be. This is because the small particles in the spray/plume will hit the slower, larger ones and effectively reduce the velocity of both.

The particles of the repair material may be accelerated to supersonic velocities using compressed gas, such as helium, nitrogen, other inert gases, and mixtures thereof. Helium is a preferred gas because it produces the highest velocity due to its low molecular weight.

The bonding mechanism employed by the method of the present invention for transforming the powdered repair material into a deposit is strictly solid state, meaning that the particles plastically deform but do not melt. Any oxide layer that is formed on the particles, or is present on the component surface, is broken up and fresh metal-to-metal contact is made at very high pressures.

The powdered metal repair material used to form the deposit may be fed to the spray gun 22 using any suitable means known in the art, such as modified thermal spray feeders. One custom designed feeder that may be used is manufactured by Powder Feed Dynamics of Cleveland, Ohio. This feeder has an auger type feed mechanism. Fluidized bed feeders and barrel roll feeders with an angular slit may also be used.

In the process of the present invention, the feeders may be pressurized with a gas selected from the group consisting of helium, nitrogen, other inert gases, and mixtures thereof. Feeder pressures are generally 15 psi (0.1 MPa) above the main gas or head pressures, which pressures are usually in the range of from 200 psi (1.38 MPa)to 500 psi (3.45 MPa), depending on the powdered repair material composition. The main gas is preferably heated so that gas temperatures are in the range of from 600 degrees Fahrenheit (316°C) to 1200 degrees Fahrenheit (649°C). If desired, the main gas may be heated as high as approximately 1250 degrees Fahrenheit (677°C) depending on the material being deposited. The gas may be heated to keep it from rapidly cooling and freezing once it expands past the throat of nozzle 20. The net effect is a surface temperature on the part being repaired of about 115 degrees Fahrenheit (46°C) during deposition. Any suitable means known in the art may be used to heat the gas.

To deposit the repair material, the nozzle 20 may pass over the surface 24 of the part 10 being repaired more than once. The number of passes required is a function of the thickness of the repair material to be applied. The method of the present invention is capable of forming a deposit having any desired thickness. When building a deposit layer of repair material, it is desirable to limit the thickness per pass in order to avoid a quick build up of residual stresses and unwanted debonding between deposit layers.

The main gas that is used to deposit the particles of the repair material onto the surface 24 may be passed through the nozzle 20 via inlet 30 and/or inlet 32 at a flow rate of from 0.001 SCFM to 50 SCFM, preferably in the range of from 15 SCFM to 35 SCFM. The foregoing flow rates are preferred if helium is used as the main gas. If nitrogen is used by itself or in combination with helium as the main gas, the nitrogen gas may be passed through the nozzle 20 at a flow rate of from 0.001 SCFM to 30 SCFM, preferably from 4 to 30 SCFM, more preferably from 4 to 8 SCFM. Alternatively, the nozzle 20 may have a single inlet which is connected to a valve for switching between two gases.

The main gas temperature may be in the range of from 600 degrees Fahrenheit (316°C) to 1200 degrees Fahrenheit (649°C), preferably from 700 degrees Fahrenheit (371°C) to 1000 degrees Fahrenheit (538°C), and most preferably from 725 degrees Fahrenheit (385°C) to 900 degrees Fahrenheit (482°C).

The pressure of the spray gun 22 may be in the range of from 200 psi (1.38 MPa) to 500 psi (3.45 MPa), preferably from 200 psi (1.38 MPa) to 400 psi (276 MPa) and most preferably 275 psi (1.90 MPa) to 375 psi (2.59 MPa). The powdered repair material is preferably fed from a hopper, which is under a pressure of 10 to 50 psi (69 kPa to 345 kPa) higher than the specific main gas pressure, preferably 15 psi (103 kPa) higher, to the spray gun 22 via line 34 at a rate in the range of from 10 grams/min to 100 grams/min, preferably from 15 grams/min to 50 grams/min.

The powdered repair material is fed to the spray gun 22 using a non-oxidizing carrier gas. The carrier gas may be introduced via inlet 30 and/or inlet 32 at a flow rate of from 0.001 SCFM to 50 SCFM, preferably from 8 SCFM to 15 SCFM. The foregoing flow rate is useful if helium is used as the carrier gas. If nitrogen by itself or mixed with helium is used as the carrier gas, a flow rate of from 0.001 SCFM to 30 SCFM, preferably from 4 to 10 SCFM, may be used.

The spray nozzle 20 is preferably held at a distance from the surface 24. This distance is known as the spray distance. Preferably, the spray distance is in the range of from 10 mm. to 50 mm.

The velocity of the powdered repair material particles leaving the spray nozzle 20 may be in the range of from 825 m/s to 1400 m/s. preferably from 850 m/s to 1200 m/s.

The deposit thickness per pass may be in the range of from 0.001 inches (0.025 mm) to 0.030 inches (0.076 mm).

After deposition, a subsequent finishing operation may be required to bring the repair back to required dimensions. In most instances, a heat treatment may also be required. In such instances, standard heat treatments for the deposited materials may be performed.

Cold spray offers many advantages over other metallization processes. Since the metal powders used for the repair material are not heated to high temperatures, no oxidation, decomposition, or other degradation of the feedstock material occurs. Powder oxidation during deposition is also controlled since the particles are contained within the accelerating, non-oxidizing gas stream. Cold spray also retains the microstructure of the feedstock. Still further, because the feedstock is not melted, cold spray offers the ability to deposit materials that cannot be sprayed conventionally due to the formation of brittle intermetallics or a propensity to crack upon cooling or during subsequent heat treatments.

Cold spray, because it is a solid state process, does not heat up the part appreciably. While the carrier gas is heated, the particles remain in the gas for a relatively short time and so do not reach the carrier gas temperature. Also, as the gas expands through the diverging section of the nozzle, it cools down. As a result, the part is not heated appreciably and any resulting thermal distortion is minimized. Cold spray induces compressive surface residual stresses, so the driving force for strain age cracking is eliminated. Eliminating the potential for strain age cracking leads to more robust repairs.

While the present invention has been described in the context of using a cold spray process, other processes can be used to effect the repairs. These processes provide sufficient energy to accelerate particles to a high enough velocity such that, upon impact, they plastically deform and bond to the surface and build a relatively dense coating or structural deposit. These processes also do not metallurgically transform the particles from their solid state. These processes include, but are not limited to, kinetic metallization, electromagnetic particle acceleration, modified high velocity air fuel spraying, and high velocity impact fusion.

The repair process of the present invention may be used to repair a wide variety of components and parts such as any superalloy turbine component and a corrosion-resistant pump, fabricated from a nickel based superalloy.

## Claims

1. A method for repairing components formed from a superalloy material comprises the steps of:
providing a component (10) formed from a superalloy material having a defect to be repaired; and
depositing a repair material onto a surface of said component (10) using a non-oxidizing carrier gas so that said repair material plastically deforms without melting and bonds to said surface upon impact with said surface and thereby covers said defect.

2. A method according to claim 1, wherein said depositing step comprises depositing a superalloy material onto said surface.

3. A method according to claim 1, wherein said component providing step comprises providing a component (10) formed from a nickel base superalloy and wherein said depositing step comprises depositing a nickel base superalloy repair material.

4. A method according to claim 1, 2 or 3 wherein said depositing step comprises providing said repair material in particle form having a particle size in the range of from 5 microns to 50 microns and accelerating said particles to a speed in the range of from 825 m/s to 1400 m/s, and feeding said metal powder to a spray nozzle (20) at a feed rate of from 10 grams/min to 100 grams/min at a pressure in the range of from 200 psi (1.38 MPa) to 500 psi (3.45 MPa) using a carrier gas selected from the group consisting of helium, nitrogen, an inert gas and mixtures thereof.

5. The method according to claim 4, wherein said feeding step comprises feeding said metal powder to said spray nozzle (20) at a feed rate from 15 grams/min to 50 grams/min.

6. The method according to claim 4 or 5, wherein said carrier gas comprises helium and said feeding step comprises feeding said helium to said nozzle (20) at a flow rate of from 0.001 SCFM to 50 SCFM.

7. The method according to claim 6, wherein said feeding step comprises feeding said helium to said nozzle (20) at a flow rate of from 8 to 15 SCFM.

8. The method according to claim 4, wherein said carrier gas comprises nitrogen and said feeding step comprises feeding said nitrogen to said nozzle at a flow rate of from 0.001 SCFM to 30 SCFM.

9. The method according to claim 8, wherein said feeding step comprises feeding said nitrogen to said nozzle at a flow rate of from 4 to 10 SCFM.

10. The method according to any of claims 4 to 9, wherein said depositing step further comprises passing said metal powder particles through said nozzle (20) using a main gas selected from the group consisting of helium, nitrogen, and mixtures thereof at a main gas temperature in the range of from 600 degrees Fahrenheit (316°C) to 1200 degrees Fahrenheit (649°C) and at a spray pressure in the range of from 200 psi (1.38 MPa) to 500 psi (3.45 MPa).

11. The method according to claim 10, wherein said passing step comprises passing said metal powder particles through said nozzle (20) at a main gas temperature in the range of 700 degrees Fahrenheit (371°C) to 1000 degrees Fahrenheit (538°C) at a spray pressure in the range of from 200 psi (1.38 MPa) to 400 psi (2.76 MPa).

12. The method according to claim 10, wherein said main gas temperature is in the range of from 725 degrees Fahrenheit (385°C) to 900 degrees Fahrenheit (482°C) at a spray pressure in the range of from 275 psi (1.90 MPa) to 375 psi (2.59 MPa).

13. The method according to claim 10, 11 or 12 wherein said main gas comprises helium and said passing step comprises feeding said helium to said nozzle (20) at a rate in the range of from 0.001 SCFM to 50 SCFM.

14. The method according to claim 13, wherein said helium feeding step comprises feeding said helium at a rate of from 15 to 35 SCFM.

15. The method according to claim 10, 11 or 12 wherein said main gas comprises nitrogen and said passing step comprises feeding said nitrogen to said nozzle (20) at a rate in the range of from 0.001 SCFM to 30 SCFM.

16. The method according to claim 15, wherein said nitrogen feeding step comprises feeding said nitrogen to said nozzle (20) at a rate in the range of from 4 to 30 SCFM.

17. The method according to claim 15, wherein said nitrogen feeding step comprises feeding said nitrogen to said nozzle at a rate in the range of from 4 to 8 SCFM.

18. The method according to any of claims 4 to 17, further comprising maintaining said nozzle (20) at a distance from 10 mm to 50 mm from said surface.
